(19) Europäisches Patentamt
European Patent Office
Office européen des brevets

(11) EP 0 802 464 B1

(12) FASCICULE DE BREVET EUROPEEN

(45) Date de publication et mention de la délivrance du brevet:
06.08.2003 Bulletin 2003/32

(51) Int Cl.7: **G05B 11/28**, H02J 7/24, H02P 9/30

(21) Numéro de dépôt: 97105833.4

(22) Date de dépôt: 09.04.1997

(54) **Procédé de régulation par traitement numérique du courant d'excitation d'un alternateur de véhicule automobile et dispositif régulateur mettant en oeuvre un tel procédé**

Verfahren zur Steuerung des Erregungstroms eines Fahrzeuggenerators mit digitaler Verarbeitung und Steuerungsvorrichtung zur Durchführung dieses Verfahrens

Method to regulate the exciting current of a automotive vehicle generator using digital processing and regulator device for carrying out this method

(84) Etats contractants désignés:
DE ES GB IT

(30) Priorité: 18.04.1996 FR 9604856

(43) Date de publication de la demande:
22.10.1997 Bulletin 1997/43

(73) Titulaire: VALEO EQUIPEMENTS ELECTRIQUES MOTEUR
94017 Creteil (FR)

(72) Inventeur: Pierret, Jean-Marie
75012 Paris (FR)

(74) Mandataire: Gamonal, Didier
Valeo Management Services
Propriété Industrielle
2, rue André Boulle,
B.P. 150
94004 Créteil (FR)

(56) Documents cités:
EP-A- 0 417 782          EP-A- 0 481 862
US-A- 4 673 862          US-A- 5 444 354

• PIGERON B. ET AL.: "Boucles de régulation" 1988 , BHALY, KIRK EDITIONS , MAISONS-ALFORT, FRANCE XP002021885 * page 123, alinéa 4.42 *
• PATENT ABSTRACTS OF JAPAN vol. 014, no. 066 (P-1003), 7 février 1990 & JP 01 287703 A (NKK CORP), 20 novembre 1989,

**Description**

La présente invention concerne un procédé de régulation du courant d'excitation d'un alternateur de véhicule automobile par traitement numérique et un dispositif régulateur mettant en oeuvre un tel procédé.

De manière connue, un alternateur est une machine électrique dans laquelle un courant alternatif est généré dans ses enroulements de stator sous l'effet d'un inducteur qui est parcouru par un courant d'excitation lorsque cet inducteur est mis en rotation. A la sortie des enroulements du stator, un pont de diode assure le redressement du courant alternatif de manière à délivrer à la batterie du véhicule une tension continue.

Cette tension doit être régulée de manière à rester constante quelle que soit la vitesse de rotation de l'alternateur et quelle que soit la charge à laquelle est soumise la batterie. La tension de sortie de l'alternateur présente ainsi une ondulation de régulation à l'image du courant d'excitation, cette ondulation étant de période $T$, comprenant une première alternance $T_1$ pendant laquelle la tension de la batterie du véhicule est appliquée à l'inducteur ce qui permet d'augmenter le courant circulant dans l'inducteur, et une deuxième alternance $T_2$ pendant laquelle la tension de la batterie n'est pas appliquée à l'inducteur ce qui fait diminuer le courant dans l'inducteur.

Le rapport $T_1/(T_1+T_2)$ est appelé rapport cyclique.

Il est connu d'utiliser des techniques numériques pour effectuer la régulation. Le brevet européen n° EP-A-0 481 862 décrit notamment un procédé de régulation par traitement numérique, selon lequel on effectue une mesure de la tension de sortie de l'alternateur à chaque période $T$, par échantillonnage, puis la valeur numérique de la tension mesurée est comparée à une valeur de référence et on déduit de cette comparaison la valeur des alternances $T_1$ et $T_2$ de la période suivante en modifiant le rapport cyclique d'une valeur directement proportionnelle à la différence entre la tension de sortie mesurée et la tension de référence.

Un problème se pose dans le choix de la valeur qui modifie le rapport cyclique. En effet, si la durée du créneau d'excitation $T_1$ est faible et qu'une augmentation brutale de la charge appliquée à l'alternateur survient, il est souhaitable, pour assurer une réaction rapide du système, d'augmenter rapidement la durée du créneau $T_1$ d'excitation et donc d'avoir une valeur de modification du rapport cyclique importante. Ceci nécessite de multiplier la différence entre la tension mesurée et la tension de référence par un facteur correctif élevé.

Par contre, dans ce cas, la moindre variation entre la tension mesurée et la tension de référence sera répercutée de manière brutale sur le créneau d'excitation et la régulation ne sera pas stable.

La présente invention a pour but de pallier ces inconvénients en fournissant un procédé de régulation qui permette une réaction rapide du système de régulation tout en assurant une régulation stable.

Elle propose à cet effet un procédé de régulation du courant d'excitation d'un inducteur d'alternateur pour véhicule automobile, ledit alternateur comprenant notamment un pont redresseur délivrant une tension de sortie redressée à réguler, la tension redressée présentant une ondulation comportant une composante de fréquence basse provoquée par le signal d'excitation, variable en amplitude, ladite tension redressée étant ainsi une tension périodique dont chaque période $T$ se décompose en une première alternance $T_1$ durant laquelle la tension de la batterie du véhicule est appliqué à l'inducteur et une deuxième alternance $T_2$ pendant laquelle la tension de la batterie n'est pas appliqué à l'inducteur, consistant:

- à mesurer la tension redressée par échantillonnage, c'est à dire en effectuant des mesures successives et rapprochées,
- à comparer la valeur mesurée de la tension redressée à une valeur de référence calculée, caractérisé en ce qu'on déduit de cette comparaison:

- une première valeur numérique correspondant à la différence entre la valeur mesurée de la tension redressée et la valeur de référence,
- une deuxième valeur numérique, appelée excitation en boucle fermée, qui est calculée, à chaque période $T$, en ajoutant à la valeur d'excitation en boucle fermée de la période précédente la première valeur numérique à laquelle on applique un premier facteur correctif,
- une troisième valeur numérique, appelée excitation en boucle ouverte, qui est calculée, à chaque période $T$, en ajoutant à la valeur d'excitation en boucle fermée précédemment calculée, lors de la même période $T$, la première valeur numérique à laquelle on applique un deuxième facteur correctif, cette troisième valeur numérique déterminant le temps $T_1$ pendant lequel on applique la tension de la batterie à l'inducteur.

Selon un aspect préféré de l'invention, le deuxième facteur correctif est un nombre dont la valeur est supérieure à celle du premier facteur correctif.

Grâce à l'invention, on utilise deux variables séparées, l'une, l'excitation en boucle ouverte, qui détermine la durée de l'alternance $T_1$ d'excitation, évolue rapidement, ce qui permet de répondre rapidement à une hausse de charge, tandis que l'autre, l'excitation en boucle fermée, évolue beaucoup moins d'une période à l'autre et sert, à chaque période, de base de calcul de l'excitation en boucle ouverte. Ceci permet donc d'avoir une régulation à la fois stable et rapide.

Selon un autre aspect de l'invention, lorsqu'on a calculé la deuxième valeur numérique d'excitation en boucle fermée, on effectue un test et si ladite valeur d'excitation en boucle fermée est égale à la durée de la période T, alors la troisième valeur numérique d'excitation en boucle ouverte est égale à la période T.

Ceci permet, lorsque l'on se trouve en plein champ, c'est à dire lorsque la tension d'excitation est appliquée à l'inducteur pendant toute la période T, d'éviter de faire le calcul de l'excitation en boucle ouverte.

Selon d'autres caractéristiques de l'invention,

- la valeur de référence est calculée en fonction d'au moins un paramètre lié à l'alternateur et/ou à la batterie du véhicule;
- la valeur de référence est calculée en fonction de la température de l'alternateur et / ou de la batterie.

Selon un autre aspect de l'invention, le procédé de régulation consiste:

- à effectuer, au cours de chaque période T, une mesure de température,
- à en déduire une valeur de référence, fonction de la température mesurée, ladite valeur de référence étant ensuite comparée avec la valeur de la tension redressée mesurée.

Selon une autre caractéristique de l'invention, la valeur de référence est calculée, à partir d'une valeur prédéterminée pour une température donnée, en appliquant à cette valeur prédéterminée un facteur correctif qui est une fonction de la température.

D'autres caractéristiques et avantages apparaîtront à la lecture de la description suivante en se référant aux dessins annexés parmi lesquels:

- la figure 1 est un schéma de principe d'un dispositif régulateur selon l'invention;
- la figure 2 représente des diagrammes temporels de plusieurs signaux illustrant le procédé de l'invention;
- les figures 3 et 4 sont des organigrammes montrant le fonctionnement de l'invention;
- la figure 5 est une courbe présentant la valeur de référence de la tension de sortie calculée en fonction de la température.

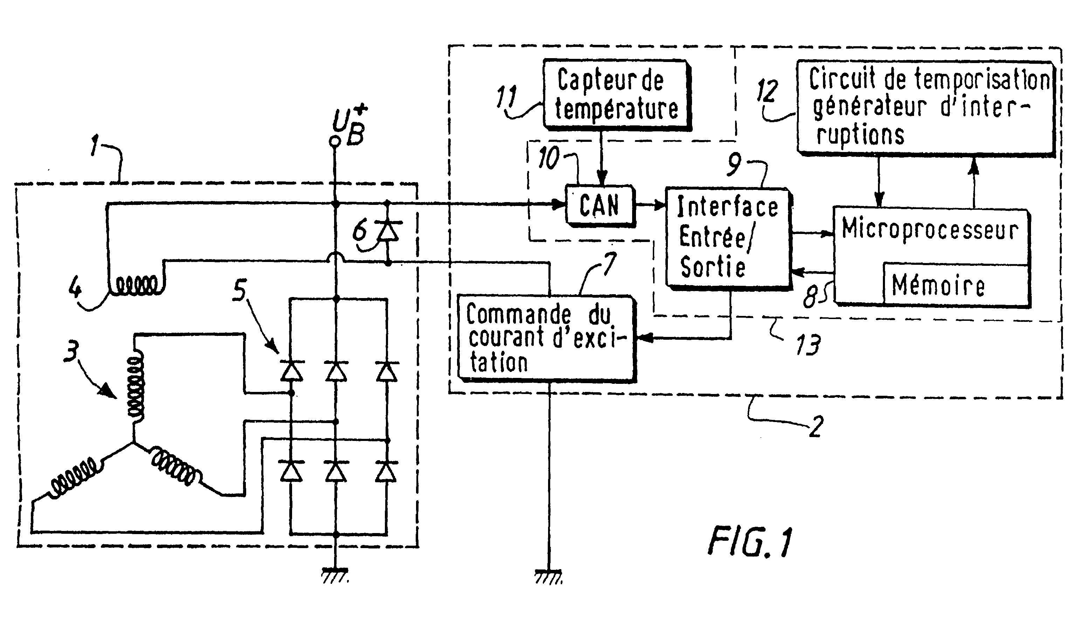

La figure 1 illustre un alternateur 1 comprenant des enroulements de stator 3 dans lesquels est généré, sous l'action d'un inducteur 4, une tension alternative. Un pont de diodes 5 est connecté à la sortie des enroulements pour délivrer une tension redressée $U_B^+$ appliquée à la batterie et au réseau de bord du véhicule.

Le courant d'excitation parcourant l'inducteur 4 est régulé par un dispositif régulateur 2. Celui-ci comprend un circuit de commande du courant d'excitation 7, constitué par exemple d'un transistor de puissance qui, lorsqu'il est passant, laisse passer un courant d'excitation et, lorsqu'il est bloqué, empêche l'inducteur d'être alimenté par la batterie du véhicule. Une diode 6 assure une recirculation du courant dans l'inducteur pendant les phases où l'inducteur n'est plus alimenté par la batterie.

Le dispositif régulateur 2 comprend en outre un microcontrôleur 13 comportant:

- un microprocesseur 8, muni d'une mémoire, qui effectue les calculs et traitements nécessaires à la régulation;
- une interface d'entrée et de sortie 9 du microprocesseur;
- un convertisseur analogique / numérique 10 qui transforme la tension $U_B^+$ redressée de l'alternateur en une série d'octets et qui convertit la tension délivrée par le capteur de température 11, représentative de la température de l'alternateur ou de la batterie, en une valeur numérique;
- un circuit de temporisation 12 qui provoque des interruptions pour changer l'état d'excitation et qui se charge des données calculées par le microprocesseur 8.

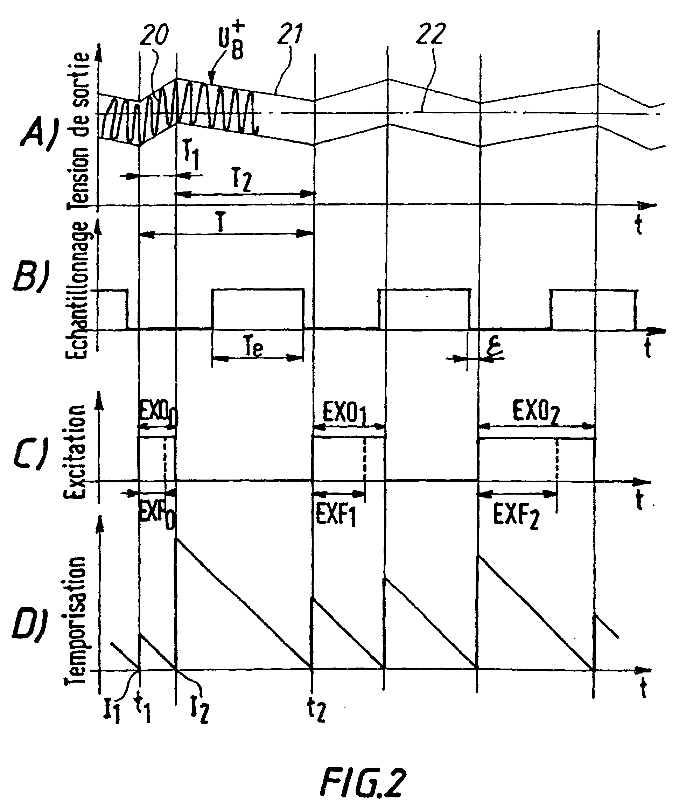

A la figure 2A, on a représenté la tension à réguler $U_B^+$ telle qu'elle apparaît en sortie de l'alternateur ou sur le réseau de bord du véhicule, le temps étant porté en abscisse et la tension en ordonnée.

Cette tension $U_B^+$ présente une ondulation 20 de fréquence élevée, qui est due en particulier au pont de diodes 5 assurant le redressement de $U_B^+$. A cette ondulation se superpose une ondulation 21, de fréquence beaucoup moins élevée, qui varie en amplitude en fonction des variations du courant d'excitation dans l'inducteur.

La valeur moyenne de la tension $U_B^+$ oscille ainsi autour d'une tension moyenne 22.

En liaison avec la figure 2C qui représente la tension d'excitation appliquée à l'inducteur en fonction du temps, l'ondulation 21 est de période T se décomposant en deux alternances $T_1$ et $T_2$.

Pendant l'alternance $T_1$, un créneau apparaît sur la figure 2C signifiant qu'une tension d'excitation est appliquée à l'inducteur 4, ce qui fait croître la tension $U_B^+$ comme on peut le voir sur la figure 2A.

Pendant l'alternance $T_2$, par contre, aucune tension d'excitation n'est appliquée à l'inducteur, ce qui se traduit par un niveau zéro sur la figure 2C et qui fait décroître la tension $U_B^+$ (figure 2A).

Le rapport cyclique $T_1/(T_1+T_2)$ peut en théorie varier de 0 à 100 % suivant les besoins des circuits utilisateurs et suivant l'état de charge de la batterie.

Ce rapport cyclique, ou plus exactement la durée de l'alternance $T_1$, est calculé en utilisant, selon l'invention, deux variables: une variable dite d'excitation en boucle fermée EXF et une variable dite d'excitation en boucle ouverte EXO.

Sur la figure 2C, on peut voir que la variable EXO est celle qui détermine la valeur de l'alternance $T_1$, c'est à dire la durée pendant laquelle une tension d'excitation est appliquée à l'inducteur. Cette variable évolue rapidement d'une période à l'autre.

Le seconde variable EXF est utilisée, comme on le verra dans la suite de la description, en tant qu'intermédiaire de calcul et elle évolue beaucoup moins rapidement dans le temps, ce qui garantit une bonne stabilité de la régulation.

La figure 2B représente des créneaux $T_e$ qui correspondent à la durée pendant laquelle on effectue une mesure de la tension $U_B^+$, par échantillonnage, au cours de chaque période T.

Cette mesure par échantillonnage de durée $T_e$ est placée à la fin de chaque période T, quel que soit le rapport cyclique, de façon qu'elle se termine à un temps $\varepsilon$, très court, avant la fin de la période T et elle est égale à une demi-période T.

Ainsi, la mesure de la tension $U_B^+$ est fiable puisqu'elle dure une demi-période, et le fait qu'elle soit placée en fin de période T permet d'avoir un temps de réponse rapide du dispositif de régulation.

L'ensemble de ces opérations est effectué par un programme géré par le microcontrôleur 13.

Ainsi, la figure 2D montre qu'une interruption $I_1$, provoquée par le circuit de temporisation 12, déclenche l'apparition d'un créneau d'excitation (visible sur la figure 2C) qui dure pendant toute la durée $T_1$ chargée dans le circuit de temporisation.

Une fois cette durée écoulée, le circuit de temporisation provoque une interruption $I_2$ qui fait basculer l'excitation à zéro pendant toute la durée $T_2$.

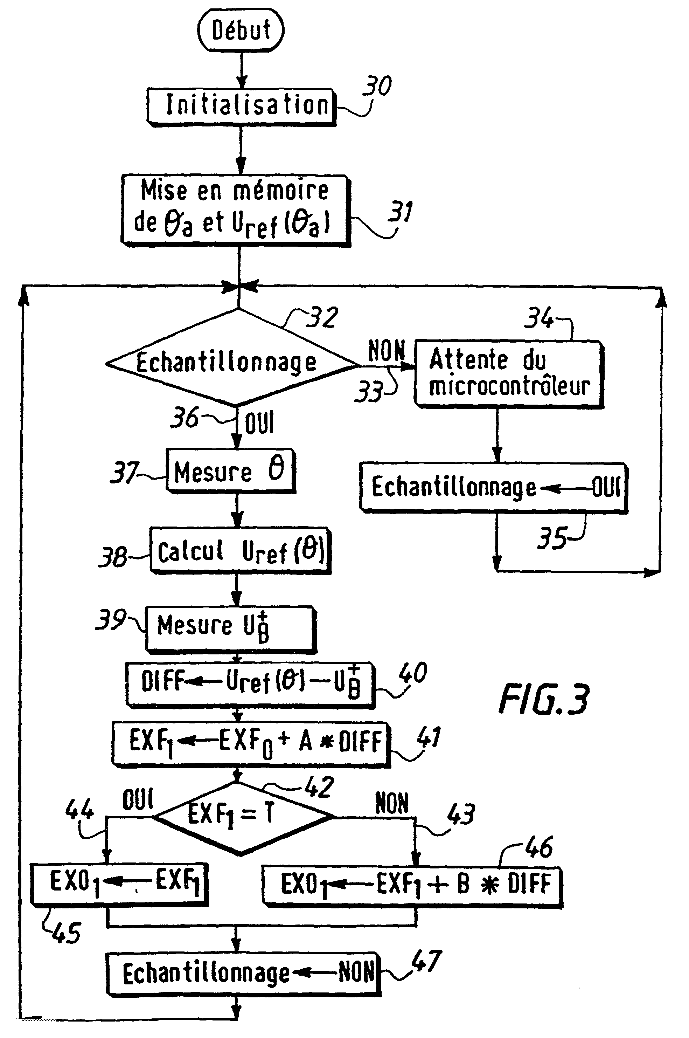

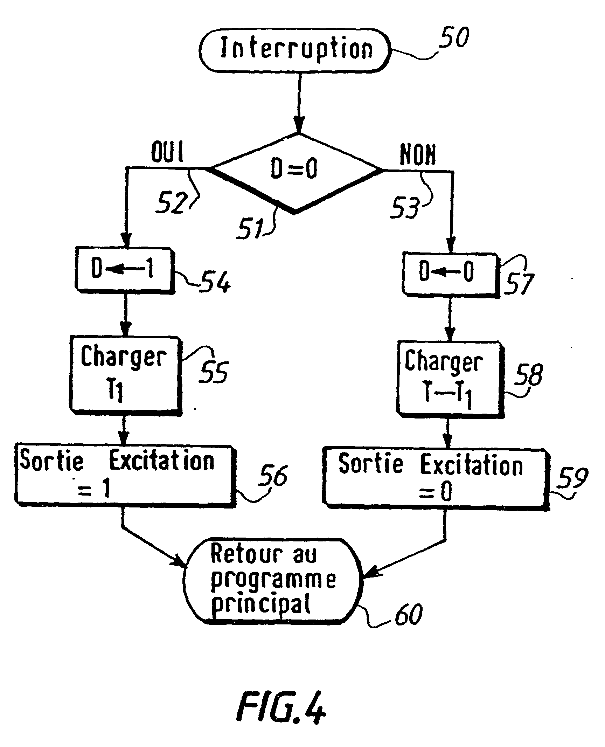

Dans la suite de la description, le fonctionnement du procédé de régulation de l'invention sera décrit en se reportant aux organigrammes des figures 3 et 4 qui montrent un exemple de mise en oeuvre dudit procédé.

La figure 3 représente le programme principal qui est effectué par le microcontrôleur 13 tandis que la figure 4 montre un programme d'interruption, effectué à chaque interruption générée par le circuit de temporisation 12, qui a une durée négligeable par rapport à celle des autres opérations effectuées par le programme principal.

Le programme commence par une initialisation 30 de tous les paramètres utilisés par le microcontrôleur 13 et par le circuit de temporisation 12 puis par une mémorisation 31 des valeurs prédéterminées de la température $\theta_a$ et de la tension correspondante $U_{ref}(\theta_a)$.

Pour décrire en détail ce programme, on suppose se trouver à l'instant $t_1$ au moment où l'interruption $I_1$ vient d'être provoquée déclenchant l'apparition d'un créneau d'excitation d'une durée $T_1$.

L'indicateur d'échantillonnage ayant été positionné sur Non lors de l'initialisation du programme, lorsque le test 32 est effectué, c'est sa sortie 33 qui est choisie. Le microcontrôleur attend donc en 34 que s'écoule une durée chargée préalablement en mémoire qui est inférieure à $T - T/2 - \varepsilon$. Puis l'indicateur d'échantillonnage est positionné sur Oui en 35.

Il est à noter que l'attente 34 du microcontrôleur peut être utilisée de manière plus profitable en effectuant des calculs ou des traitements complémentaires qui ne font pas l'objet de la présente invention.

Lors du nouveau test 32 de l'indicateur d'échantillonnage, c'est sa sortie 36 qui est choisie et les opérations suivantes sont alors effectuées:

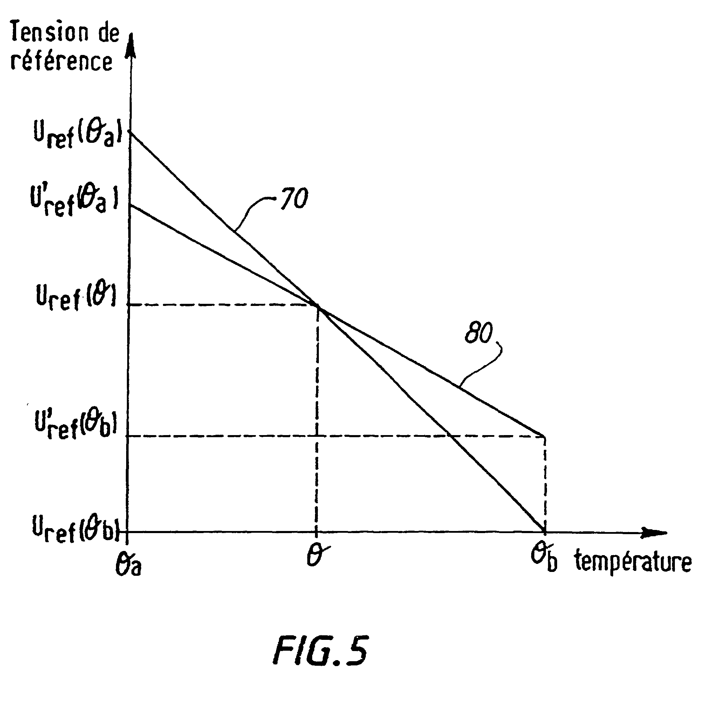

- en 37, on effectue une mesure de la température $\theta$ en utilisant les informations délivrées par le capteur de température 11 au convertisseur analogique / numérique 10;
- en 38, on calcule la valeur de référence de la tension $U_{ref}(\theta)$ en fonction de la température $\theta$ qui a été mesurée; le procédé de calcul sera exposé plus loin en référence à la figure 5;
- lorsqu'une durée $T - T/2 - \varepsilon$ s'est écoulée depuis l'instant $t_1$, la mesure de la tension $U_B^+$ est déclenchée en 39 et elle s'effectue pendant toute la durée $T_e$ par échantillonnage, c'est à dire qu'on effectue N mesures successives de $U_B^+$ qui sont additionnées et mémorisées par le microprocesseur 8 sous forme d'un nombre de deux octets.

En variante, les opérations de mesure de la température $\theta$ (étape 37) et de calcul de la valeur de référence $U_{ref}(\theta)$ (étape 38) peuvent être effectuées à l'étape 34.

A la fin de la durée $T_e$, et pendant le temps $\varepsilon$, on procède au calcul des variables EXF et EXO qui permettent de définir le rapport cyclique de la période suivante:

- en 40, la différence entre la valeur de la tension $U_B^+$ mesurée et la valeur de référence $U_{ref}(\theta)$ est mémorisée dans une variable DIFF;
- en 41, on effectue le calcul de la variable d'excitation en boucle fermée $EXF_1$ en fonction de la variable $EXF_0$ calculée à la période précédente; pour cela, on multiplie la valeur mémorisée dans la variable DIFF par un coefficient A et on ajoute le résultat de ce calcul à la variable $EXF_0$ pour obtenir $EXF_1$;
- en 42, on effectue un test pour vérifier si la variable $EXF_1$ qui vient d'être calculée est égale ou non à la durée de la période T;
- si $EXF_1$ est égale à T, alors la sortie 44 du test 42 est choisie et, en 45, on affecte à la variable d'excitation en boucle ouverte $EXO_1$ la valeur de $EXF_1$ précédemment calculée, c'est à dire la valeur de la période T;
- si par contre le résultat du test 42 est négatif, alors la sortie 43 du test est choisie et, en 46, on effectue le calcul de la variable d'excitation en boucle ouverte $EXO_1$ en additionnant à la valeur de $EXF_1$ calculée précédemment la valeur de la variable DIFF multipliée par un coefficient B, supérieur au coefficient A;
- puis, en 47, on bascule l'indicateur d'échantillonnage sur Non et on retourne au test 32.

Les coefficients A et B sont des nombres, stockés en mémoire, qui ont été préalablement déterminés en effectuant des essais comparatifs. Par exemple, A = 2 et B= 4.

Le valeur de $EXO_1$, dont le calcul vient d'être décrit, définit la durée du créneau d'excitation qui sera appliqué à la période immédiatement suivante, dès l'instant $t_2$ (en se référant à la figure 2).

L'utilisation des deux variables EXF et EXO, dont le mode de calcul est différent, permet d'augmenter le créneau d'excitation d'une manière importante quand cela est nécessaire (augmentation de la charge appliquée à l'alternateur) grâce à la variable EXO, tout en conservant une certaine stabilité grâce à la variable EXF qui évolue d'une manière moins importante d'une période à l'autre et qui sert toujours de base de calcul à la variable EXO.

En référence à la figure 4, nous allons maintenant décrire le programme d'interruptions qui est effectué par le microcontrôleur 13 à chaque fois qu'une interruption est déclenchée par le circuit de temporisation 12.

Lorsqu'une interruption 50 intervient, un test 51 est effectué pour connaître l'état d'un drapeau de contrôle d'interruptions D.

Si le drapeau D est à 0, alors la sortie 52 du test est choisie. A l'étape 54, on charge aussitôt la valeur 1 dans le drapeau D puis, en 55, on charge la valeur $T_1$ qui a été calculée par le programme principal, c'est à dire la valeur de la variable EXO, dans le circuit de temporisation 12 pour que celui-ci provoque la prochaine interruption lorsque se sera écoulé le temps $T_1$.

En 56, le microcontrôleur 13 commande au circuit de contrôle du courant d'excitation 7 d'alimenter l'inducteur 4 avec un courant d'excitation, c'est à dire qu'on déclenche un créneau d'excitation d'une durée $T_1$, comme ceux visibles à la figure 2C, puis on retourne, en 60, au programme principal.

Lorsque la durée d'excitation $T_1$ est écoulée, le circuit de temporisation 12 provoque une nouvelle interruption et on effectue à nouveau le test 51.

Comme le drapeau D est à 1, c'est alors la sortie 53 du test 51 qui est choisie. En 57, on charge la valeur 0 dans le drapeau D, puis en 58, on charge dans le circuit de temporisation 12 la valeur $T - T_1 = T - EXO$ en fonction de la valeur EXO qui a été calculée par le programme principal. Enfin en 59, on commande au circuit de contrôle du courant d'excitation 7 de cesser d'alimenter l'inducteur 4 pendant toute la durée $T - T_1$ et on retourne au programme principal en 60.

Lorsque la durée $T - T_1$ se sera écoulée, une nouvelle interruption sera déclenchée et comme le drapeau D est à 0, ce sont les étapes 51, 52 et 54 à 56 qui seront effectuées.

La figure 5 illustre de quelle manière est calculée la valeur de référence $U_{ref}(\theta)$ de la tension redres-sée, à partir d'une valeur $U_{ref}(\theta_a)$ prédéterminée pour une température $\theta_a$ donnée.

A partir de cette valeur prédéterminée, on applique un facteur correctif $f(\theta)$ qui dépend de la température $\theta$ qui a été mesurée:

$$U_{ref}(\theta) = U_{ref}(\theta_a) - f(\theta).$$

A la figure 5, on a représenté deux exemples possibles de la fonction $-f(\theta)$ par les courbes 70 et 80.

Si par exemple f est une fonction linéaire croissante avec la température $\theta$, la représentation graphique de $-f(\theta)$ est une droite dont la pente est négative.

Dans l'exemple considéré, les courbes sont calculées entre $\theta_a = -30°C$ et $\theta_b = 140°C$. Dans la courbe 70, $U_{ref}(\theta_a) = 15,05$ Volts et $U_{ref}(\theta_b) = 13,35$ Volts ce qui permet d'obtenir une compensation thermique de -10 millivolts/°C tandis que dans la courbe 80, $U'_{ref}(\theta_a) = 14,725$ Volts et $U'_{ref}(\theta_b) = 14,13$ Volts ce qui permet d'obtenir une compensation thermique de -3,5 millivolts/°C.

Naturellement, on pourra utiliser d'autres formes de compensations thermiques, notamment la fonction f n'est pas forcément une fonction linéaire mais peut être quelconque.

De même, la valeur de référence de la tension de sortie pourra être calculée en fonction d'autres paramètres de l'alternateur comme sa vitesse ou la charge qui lui est appliquée

## Revendications

**1.** Procédé de régulation du courant d'excitation d'un inducteur (4) d'alternateur pour véhicule automobile, ledit alternateur comprenant notamment un pont redresseur (5) délivrant une tension de sortie redressée $(U_B^+)$ à réguler, la tension redressée $(U_B^+)$ présentant une ondulation comportant une composante de fréquence basse provoquée par le signal d'excitation, variable en amplitude, ladite tension redressée étant ainsi une tension périodique dont chaque période T se décompose en une première alternance $T_1$ durant laquelle la tension de la batterie du véhicule est appliquée à l'inducteur et une deuxième alternance $T_2$ pendant laquelle la tension de la batterie n'est pas appliquée à l'inducteur, consistant:

- à mesurer la tension redressée $(U_B^+)$ par échantillonnage, c'est à dire en effectuant des mesures successives et rapprochées,
- à comparer la valeur mesurée de la tension redressée $(U_B^+)$ à une valeur de référence calculée $(U_{ref})$,

**caractérisé en ce qu'**on déduit de cette comparaison:

- une première valeur numérique (DIFF) correspondant à la différence entre la valeur mesurée de la tension redressée ($U_B^+$) et la valeur de référence ($U_{ref}$),
- une deuxième valeur numérique (EXF), appelée excitation en boucle fermée, qui est calculée, à chaque période T, en ajoutant à la valeur d'excitation en boucle fermée de la période précédente la première valeur numérique (DIFF) à laquelle on applique un premier facteur correctif (A),
- une troisième valeur numérique (EXO), appelée excitation en boucle ouverte, qui est calculée, à chaque période T, en ajoutant à la valeur d'excitation en boucle fermée précédemment calculée, lors de la même période T, la première valeur numérique (DIFF) à laquelle on applique un deuxième facteur correctif (B), cette troisième valeur numérique déterminant le temps $T_1$ pendant lequel on applique la tension de la batterie à l'inducteur (4).

2. Procédé de régulation selon la revendication 1, **caractérisé en ce que** le deuxième facteur correctif (B) est un nombre dont la valeur est supérieure à celle du premier facteur correctif (A).

3. Procédé de régulation selon l'une des revendications 1 ou 2, **caractérisé en ce que** lorsqu'on a calculé la deuxième valeur numérique d'excitation en boucle fermée, on effectue un test et si ladite valeur d'excitation en boucle fermée est égale à la durée de la période T alors la troisième valeur numérique d'excitation en boucle ouverte est égale à la période T.

4. Procédé de régulation selon l'une des revendications précédentes, **caractérisé en ce que** la valeur de référence ($U_{ref}$) est calculée en fonction d'au moins un paramètre lié à l'alternateur et/ou à la batterie du véhicule.

5. Procédé de régulation selon la revendication 4, **caractérisé en ce que** la valeur de référence ($U_{ref}$) est calculée en fonction de la température de l'alternateur et / ou de la batterie.

6. Procédé de régulation selon l'une des revendications 4 ou 5, **caractérisé en ce qu'**il consiste:

- à effectuer, au cours de chaque période T, une mesure de température (θ),
- à en déduire une valeur de référence ($U_{ref}(\theta)$), fonction de la température (θ) mesurée, ladite valeur de référence étant ensuite comparée avec la valeur de la tension redressée ($U_B^+$) mesurée.

7. Procédé de régulation selon la revendication 6, **caractérisé en ce que** la valeur de référence ($U_{ref}(\theta)$) est calculée, à partir d'une valeur prédéterminée ($U_{ref}(\theta_a)$) pour une température ($\theta_a$) donnée, en appliquant à ladite valeur prédéterminée un facteur correctif qui est une fonction de la température (θ).

8. Procédé de régulation selon l'une quelconque des revendications 1 à 7, **caractérisé en ce que** la mesure de tension redressée ($UB^+$) par échantillonnage de durée Te est placée à la fin de chaque période de façon qu'elle se termine à un temps très court ($\in$) avant la fin de la période T.

9. Procédé de régulation selon 1a revendication 8, **caractérisé en ce que** 1a durée Te de la mesure d'échantillonnage est égale à une demi période.

10. Procédé de régulation selon la revendication 8 ou 9, **caractérisé en ce qu'**à la fin de la durée Te de la mesure d'échantillonnage et avant la fin de la période T, l'on procède au calcul de la deuxième valeur numérique (EXF) et de la troisième valeur numérique (EXO).

11. Dispositif régulateur du courant d'excitation d'un inducteur (4) d'alternateur pour véhicule automobile, ledit alternateur comprenant notamment un pont redresseur (5) délivrant une tension de sortie redressée ($U_B^+$) à réguler, la tension redressée ($U_B^+$) présentant une ondulation comportant une composante de fréquence basse provoquée par le signal d'excitation, variable en amplitude, ladite tension redressée étant ainsi une tension périodique dont chaque période T se décompose en une première alternance $T_1$ durant laquelle la tension de la batterie du véhicule est appliquée à l'inducteur et une deuxième alternance $T_2$ pendant laquelle la tension de la batterie n'est pas appliquée à l'inducteur, dans lequel on met en oeuvre le procédé consistant :

- à mesurer la tension redressée ($U_B^+$) par échantillonnage, c'est-à-dire en effectuant des mesures successives et rapprochées,
- à comparer la valeur mesurée de la tension redressée ($U_B^+$) à une valeur de référence calculée ($U_{REF}$),

    **caractérisé en ce qu'**on déduit de cette comparaison :

- une première valeur numérique (DIFF) correspondant à la différence entre la valeur mesurée de la tension redressée ($U_B^+$) et la valeur de référence ($U_{REF}$),
- une deuxième valeur numérique (EXF), appelée excitation en boucle fermée, qui est calculée, à chaque période T, en ajoutant à la valeur d'excitation en boucle fermée de la période précédente la première valeur numérique (DIFF) à laquelle on applique un premier facteur correctif (A),

- une troisième valeur numérique (EXO), appelée excitation en boucle ouverte, qui est calculée, à chaque période T, en ajoutant à la valeur d'excitation en boucle fermée précédemment calculée, lors de la même période T, la première valeur numérique (DIFF) à laquelle on applique un deuxième facteur correctif (B), cette troisième valeur numérique déterminant le temps $T_1$ pendant lequel on applique la tension de la batterie à l'inducteur (4).

**Patentansprüche**

1. Verfahren zur Regelung des Erregungsstroms einer Erregerwicklung (4) eines Wechselstromgenerators für Kraftfahrzeuge, wobei der besagte Wechselstromgenerator insbesondere eine Gleichrichterbrücke (5) umfaßt, die eine zu regelnde gleichgerichtete Ausgangsspannung ($U_B^+$) abgibt, wobei die gleichgerichtete Spannung ($U_B^+$) eine in der Amplitude veränderliche Schwingung mit einer Niederfrequenzkomponente aufweist, die durch das Erregungssignal bedingt ist, wobei die besagte gleichgerichtete Spannung daher eine periodische Spannung ist, deren Periode T jeweils aus einer ersten Halbperiode $T_1$, während der die Spannung der Fahrzeugbatterie an die Erregerwicklung angelegt wird, und aus einer zweiten Halbperiode $T_2$ besteht, während der die Spannung der Batterie nicht an die Erregerwicklung angelegt wird, darin bestehend:

   - die gleichgerichtete Spannung ($U_B^+$) durch Abtastung zu messen, das heißt durch Ausführung aufeinanderfolgender und angenäherter Messungen,
   - den gemessenen Wert der gleichgerichteten Spannung ($U_B^+$) mit einem berechneten Bezugswert ($U_{ref}$) zu vergleichen,

   **dadurch gekennzeichnet, daß** aus diesem Vergleich folgende Werte abgeleitet werden:

   - ein erster Digitalwert (DIFF), welcher der Differenz zwischen dem gemessenen Wert der gleichgerichteten Spannung ($U_B^+$) und dem Bezugswert ($U_{ref}$) entspricht,
   - ein als Erregung in geschlossenem Regelkreis bezeichneter zweiter Digitalwert (EXF), der bei jeder Periode T dadurch berechnet wird, daß zu dem Erregungswert in geschlossenem Regelkreis der vorangehenden Periode der erste Digitalwert (DIFF) hinzugefügt wird, auf den ein erster Korrekturfaktor (A) angewendet wird,
   - ein als Erregung in offenem Regelkreis bezeichneter dritter Digitalwert (EXO), der bei jeder Periode T dadurch berechnet wird, daß zu dem zuvor berechneten Erregungswert in geschlossenem Regelkreis bei der gleichen Periode T der erste Digitalwert (DIFF) hinzugefügt wird, auf den ein zweiter Korrekturfaktor (B) angewendet wird, wobei dieser dritte Digitalwert die Zeit $T_1$ bestimmt, während der die Batteriespannung an die Erregerwicklung (4) angelegt wird.

2. Regelungsverfahren nach Anspruch 1, **dadurch gekennzeichnet, daß** der zweite Korrekturfaktor (B) eine Zahl ist, deren Wert größer als der Wert des ersten Korrekturfaktors (A) ist.

3. Regelungsverfahren nach einem der Ansprüche 1 oder 2, **dadurch gekennzeichnet**, d a ß , nachdem der zweite Digitalwert der Erregung in geschlossenem Regelkreis berechnet worden ist, ein Test stattfindet, und wenn der besagte Wert der Erregung in geschlossenem Regelkreis gleich der Dauer der Periode T ist, dann ist der dritte Digitalwert der Erregung in offenem Regelkreis gleich der Periode T.

4. Regelungsverfahren nach einem der vorangehenden Ansprüche, **dadurch gekennzeichnet, d a ß** der Bezugswert ($U_{ref}$) in Abhängigkeit von wenigstens einem Parameter berechnet wird, der mit dem Wechselstromgenerator und/oder mit der Batterie des Fahrzeugs zusammenhängt.

5. Regelungsverfahren nach Anspruch 4, **dadurch gekennzeichnet, daß** der Bezugswert ($U_{ref}$) in Abhängigkeit von der Temperatur des Wechselstromgenerators und/oder der Batterie des Fahrzeugs berechnet wird.

6. Regelungsverfahren nach einem der Ansprüche 4 oder 5, **dadurch gekennzeichnet, daß** das Regelungsverfahren darin besteht:

   - im Verlauf jeder Periode T eine Temperaturmessung ($\theta$) durchzuführen,
   - daraus einen Bezugswert ($U_{ref}(\theta)$) in Abhängigkeit von der gemessenen Temperatur ($\theta$) abzuleiten, wobei der besagte Bezugswert anschließend mit dem gemessenen Wert der gleichgerichteten Spannung ($U_B^+$) verglichen wird.

7. Regelungsverfahren Anspruch 6, **dadurch gekennzeichnet, daß** der Bezugswert ($U_{ref}(\theta)$) unter Zugrundelegung eines vorbestimmten Werts ($U_{ref}(\theta_a)$) für eine gegebene Temperatur ($\theta_a$) berechnet wird, wobei auf den besagten vorbestimmten Wert ($U_{ret}(\theta_a)$) ein Korrekturfaktor angewendet wird, der von der Temperatur (θ) abhängig ist.

8. Regelungsverfahren einem der Ansprüche 6 bis 7, **dadurch gekennzeichnet, daß** die durch Abtastung vorgenommene Messung der gleichgerichteten Spannung (UB⁺) mit einer Dauer $T_e$ an das Ende jeder Periode gesetzt wird, so daß sie nach einer sehr kurzen Zeit (ε) vor dem Ende der Periode T endet.

9. Regelungsverfahren Anspruch 8, **dadurch gekennzeichnet, daß** die Dauer Te der Abtastmessung gleich einer Halbperiode ist.

10. Regelungsverfahren Anspruch 8 oder 9, **dadurch gekennzeichnet, daß** am Ende der Dauer Te der Abtastmessung und vor dem Ende der Periode T die Berechnung des zweiten Digitalwerts (EXF) und des dritten Digitalwerts (EXO) erfolgt.

11. Reglervorrichtung zur Regelung des Erregungsstroms einer Erregerwicklung (4) eines Wechselstromgenerators für Kraftfahrzeuge, wobei der besagte Wechselstromgenerator insbesondere eine Gleichrichterbrücke (5) umfaßt, die eine zu regelnde gleichgerichtete Ausgangsspannung (U_B⁺) abgibt, wobei die gleichgerichtete Spannung (U_B⁺) eine in der Amplitude veränderliche Schwingung mit einer Niederfrequenzkomponente aufweist, die durch das Erregungssignal bedingt ist, wobei die besagte gleichgerichtete Spannung daher eine periodische Spannung ist, deren Periode T jeweils aus einer ersten Halbperiode $T_1$, während der die Spannung der Fahrzeugbatterie an die Erregerwicklung angelegt wird, und aus einer zweiten Halbperiode $T_2$ besteht, während der die Spannung der Batterie nicht an die Erregerwicklung angelegt wird, bei dem das Verfahren angewendet wird, das darin besteht:

- die gleichgerichtete Spannung (U_B⁺) durch Abtastung zu messen, das heißt durch Ausführung aufeinanderfolgender und angenäherter Messungen,
- den gemessenen Wert der gleichgerichteten Spannung (U_B⁺) mit einem berechneten Bezugswert (U_REF) zu vergleichen,

**dadurch gekennzeichnet, daß** aus diesem Vergleich folgende Werte abgeleitet werden:

- ein erster Digitalwert (DIFF), welcher der Differenz zwischen dem gemessenen Wert der gleichgerichteten Spannung (U_B⁺) und dem Bezugswert (U_REF) entspricht,
- ein als Erregung in geschlossenem Regelkreis bezeichneter zweiter Digitalwert (EXF), der bei jeder Periode T dadurch berechnet wird, daß zu dem Erregungswert in geschlossenem Regelkreis der vorangehenden Periode der erste Digitalwert (DIFF) hinzugefügt wird, auf den ein erster Korrekturfaktor (A) angewendet wird,
- ein als Erregung in offenem Regelkreis bezeichneter dritter Digitalwert (EXO), der bei jeder Periode T dadurch berechnet wird, daß zu dem zuvor berechneten Erregungswert in geschlossenem Regelkreis bei der gleichen Periode T der erste Digitalwert (DIFF) hinzugefügt wird, auf den ein zweiter Korrekturfaktor (B) angewendet wird, wobei dieser dritte Digitalwert die Zeit $T_1$ bestimmt, während der die Batteriespannung an die Erregerwicklung (4) angelegt wird.

## Claims

1. A method of regulating the excitation current of an inductor (4) of an alternator for a motor vehicle, the said alternator including, in particular, a rectifier bridge (5) for delivering a rectified output voltage (U_B⁺) to be regulated, the rectified voltage (U_B⁺) having a waveform comprising a low frequency component of variable amplitude produced by the excitation signal, the said rectified voltage being therefore a periodic voltage, each period T of which is divided into a first phase $T_1$ during which the voltage from the battery of the vehicle is applied to the inductor, and a second phase $T_2$ during which the voltage of the battery is not applied to the inductor, the method comprising:

- measuring the rectified voltage (U_B⁺) by sampling, that is to say by performing successive measurements close to each other,

- comparing the measured value of the rectified voltage (U_B⁺) with a calculated reference value (U_ref),

**characterised in that** the following are deduced from this comparison:

- a first numerical value (DIFF) corresponding to the difference between the measured value of the rectified voltage (U_B⁺) and the reference value (U_ref),

- a second numerical value (EXF), called a closed loop excitation,.which is calculated, for each period T, by adding to the value of the closed loop excitation in the preceding period the first numerical value (DIFF), to which a first correcting factor (A) is applied,

- a third numerical value (EXO), referred to as an open loop excitation, which is calculated, in each period T, by adding to the value of the closed loop excitation previously calculated during the same period T the first numerical value (DIFF), to which a second correcting factor (B) is applied, the said third numerical value determining the time $T_1$ during which the battery voltage is applied to the inductor (4).

2. A method of regulation according to Claim 1, **characterised in that** the second correcting factor (B) is a number the value of which is greater than that of the first correcting factor (A).

3. A method of regulation according to Claim 1 or Claim 2, **characterised in that** a test is carried out when the second numerical value of closed loop excitation has been calculated, and if the said value of closed loop excitation is equal to the duration of the period T, then the third numerical value of open loop excitation is equal to the period T.

4. A method of regulation according to one of the preceding Claims, **characterised in that** the reference value ($U_{ref}$) is computed as a function of at least one parameter associated with the alternator and/or with the battery of the vehicle.

5. A method of regulation according to Claim 4, **characterised in that** the reference value ($U_{ref}$) is calculated as a function of the temperature of the alternator and/or of the battery.

6. A method of regulation according to Claim 4 or Claim 5, **characterised in that** it comprises:

   - carrying out during each period T a measurement of temperature ($\theta$),

   - deducing therefrom a reference value ($U_{ref}(\theta)$), which is a function of the measured temperature ($\theta$), the said reference value being then compared with the measured value of the rectified voltage ($U_B^+$).

7. A method of regulation according to Claim 6, **characterised in that** the reference value ($U_{ref}(\theta)$) is calculated, from a value ($U_{ref}(\theta_a)$) predetermined for a given temperature ($\theta_a$), by applying to the said predetermined value a correcting factor which is a function of the temperature ($\theta$).

8. A method of regulation according to any one of Claims 1 to 7, **characterised in that** the measurement of rectified voltage ($U_B^+$) by sampling, of duration $T_e$, is performed at the end of each period in such a way that it terminates a very short time ($\varepsilon$) before the end of the period T.

9. A method of regulation according to Claim 8, **characterised in that** the duration $T_e$ of the sampling measurement is equal to a half period.

10. A method of regulation according to Claim 8 or Claim 9, **characterised in that**, at the end of the duration $T_e$ of the sampling measurement, and before the end of the period T, the second numerical value (EXF) and the third numerical value (EXO) are calculated.

11. A device for regulating the excitation current of an inductor (4) of an alternator for a motor vehicle, the said alternator including, in particular, a rectifier bridge (5) for delivering a rectified output voltage ($U_B^+$) to be regulated, the rectified voltage ($U_B^+$) having a waveform comprising a low frequency component of variable amplitude produced by the excitation signal, the said rectified voltage being therefore a periodic voltage, each period T of which is divided into a first phase $T_1$ during which the voltage from the battery of the vehicle is applied to the inductor, and a second phase $T_2$ during which the voltage of the battery is not applied to the inductor, the device being adapted to perform a method comprising:

    - measuring the rectified voltage ($U_B^+$) by sampling, that is to say by performing successive measurements close to each other,

    - comparing the measured value of the rectified voltage ($U_B^+$) with a calculated reference value ($U_{ref}$),

    **characterised in that** the following are deduced from this comparison:

    - a first numerical value (DIFF) corresponding to the difference between the measured value of the rectified voltage ($U_B^+$) and the reference value ($U_{ref}$),

    - a second numerical value (EXF), called a closed loop excitation, which is calculated, for each period T, by adding to the value of the closed loop excitation in the preceding period the first numerical value (DIFF), to which a first correcting factor (A) is applied,

    - a third numerical value (EXO), referred to as an open loop excitation, which is calculated, in each period T, by adding to the value of the closed loop excitation previously calculated during the same period T the first numerical value (DIFF), to which a second correcting factor (B) is applied, the said third numerical value determining the time $T_1$ during which the battery voltage is applied to the inductor (4).

FIG.1

FIG.2

FIG.3

FIG.4

FIG.5